# EUROPEAN PATENT APPLICATION

(11) **EP 3 716 659 A1**
(43) Date of publication of application: **30.09.2020**
(21) Application number: 20174287.1
(22) Date of filing: 27.12.2017
(51) Int. Cl.: H04W 4/08, G06F 9/54

(54) **METHOD FOR PROCESSING ORDERED BROADCAST AND ELECTRONIC DEVICE**

(30) Priority: 10.03.2017 CN 201710144324
(62) Divisional of application: 17210742.7
(71) Applicant: GUANGDONG OPPO MOBILE TELECOMMUNICATIONS CORP., LTD., Wusha, Chang'an Dongguan, Guangdong 523860 (CN)
(72) Inventor: PEI, Runsheng, Dongguan, Guangdong 523860 (CN); FU, Liangjing, Dongguan, Guangdong 523860 (CN); WU, Ruyu, Dongguan, Guangdong 523860 (CN); LIN, Zhiyong, Dongguan, Guangdong 523860 (CN); ZHANG, Jun, Dongguan, Guangdong 523860 (CN)
(74) Representative: Mewburn Ellis LLP

(57) **Abstract**

A method for processing ordered broadcast and an electronic device (100) are provided. The method includes operations as follows. At first, a broadcast message currently sent in a broadcast queue is obtained. Then, a type of at least one broadcast receiver is determined according to the broadcast message. Finally, at least one interface for sending the broadcast message is invoked to send the broadcast message to the at least one broadcast receiver of a predefined type, when the type of at least one broadcast receiver is the predefined type.

## Description

### TECHNICAL FIELD

This disclosure relates generally to a computer technical filed, and more particularly relates to a method for processing ordered broadcast and an electronic device.

### BACKGROUND

Nowadays, broadcast is a widely used mechanism for transferring information between applications. Take Android operating system as an example, the Android operating system uses the broadcast to transmit and share data between applications. For example, the short message application and the phone application of the Android operating system are typical applications that use the broadcast mechanism.

In the Android operating system, a broadcast sender may send a broadcast message by invoking a "sendBroadcast" function, a broadcast receiver may register the BroadcastReceiver in a management module via invoking a "registerReceiver" function, and then the broadcast receiver may define interested broadcast message, thus to achieve receiving the associated broadcast message.

However, disadvantages of related broadcast processing mechanism lead to inefficient broadcast processing, greatly consumed system resource, and unstable system.

### SUMMARY

Embodiments of the disclosure provide a method and an electronic device for processing ordered broadcast, to reduce system resource consumption and increase the system stability.

The embodiments of the disclosure provide a method for processing ordered broadcast. The method includes: obtaining a broadcast message currently sent in a broadcast queue; determining a type of at least one broadcast receiver according to the broadcast message; and invoking at least one interface for sending the broadcast message and sending the broadcast message to the at least one broadcast receiver of a predefined type via the at least one interface, when the type of the at least one broadcast receiver is the predefined type.

The embodiments of the disclosure further provide an electronic device. The electronic device includes a processor, and a memory. The memory stores a plurality of instructions, the plurality of instructions being executed by the processor and causing the processor to: obtain a broadcast message currently sent in a broadcast queue; determine a type of at least one broadcast receiver according to the broadcast message; and invoke at least one interface for sending the broadcast message and send the broadcast message to the at least one broadcast receiver of a predefined type via the at least one interface, when the type of the at least one broadcast receiver is the predefined type.

The embodiments of the disclosure further provide a non-transitory computer-readable storage medium, the non-transitory computer-readable storage medium stores a plurality of instructions. When the plurality of instructions is executed by a processor, the processor is caused to execute the method for processing the ordered broadcast. The method includes: obtaining a broadcast message currently sent in a broadcast queue; determining a type of at least one broadcast receiver according to the broadcast message; and invoking at least one interface for sending the broadcast message and sending the broadcast message to the at least one broadcast receiver of a predefined type via the at least one interface, when the type of the at least one broadcast receiver is the predefined type.

According to the method, the electronic device, and the non-transitory computer-readable storage medium provided by embodiments of the disclosure, the defects of the related broadcast mechanism are resolved. Therefore, the broadcast processing efficiency is improved, the system resource consumption is reduced, and the system stability is increased.

### BRIEF DESCRIPTION OF THE ACCOMPANYING DRAWINGS

The foregoing and other objects, features and advantages of the disclosure will be apparent from the following more particular description of preferred embodiments of the disclosure, as illustrated in the accompanying drawings in which like reference characters refer to the same parts throughout the different views. The drawings are not necessarily to scale, emphasis instead being placed upon illustrating the principles of the invention.
FIG. 1 is a flowchart illustrating a method for processing ordered broadcast, according to an embodiment of the disclosure.
FIG. 2 is a flowchart illustrating a method for processing ordered broadcast, according to another embodiment of the disclosure.
FIG. 3 is a flowchart illustrating a method for processing ordered broadcast, according to further another embodiment of the disclosure.
FIG. 4 is block diagram of an ordered broadcast processing device, according to an embodiment of the disclosure.
FIG. 5 is a structure diagram of an electronic device applying the method for processing ordered broadcast, according to an embodiment of the disclosure.

### DETAILED DESCRIPTION OF ILLUSTRATED EMBODIMENTS

The present disclosure will now be described in further detail with reference to the accompanying drawings and embodiments, in which the objects, solutions, and advantages of the disclosure will become more apparent. It is to be understood that the specific embodiments described herein are merely illustrative of the disclosure and are not intended to limit the disclosure. Furthermore, in order to facilitate to describe the disclosure, the drawings only shows the structures related to the present disclosure, not all of structures.

Before discussing the embodiments in detail, it should be noted that, some embodiments are described as processing or method as illustrated in flowcharts. Although the flowcharts describe the operations in a certain order, there are many operations of the flowcharts can be executed in parallel or simultaneously. Besides, the order of each operation can be alternated. When the last operation of one flowchart is executed completely, the processing of the flowchart can be terminated or can include additional operations not illustrated in the flowchart. The processing described in the flowchart can be corresponded to methods, functions, sub-process, etc.

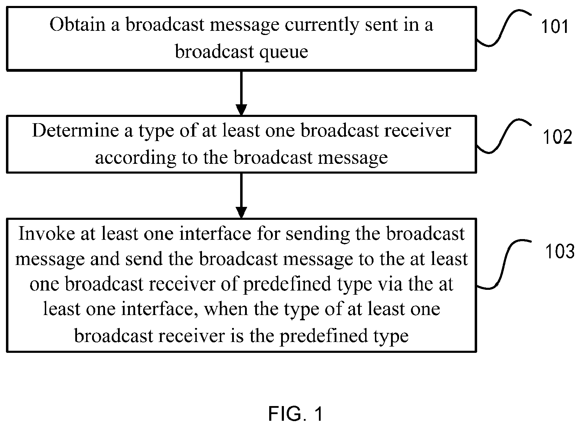

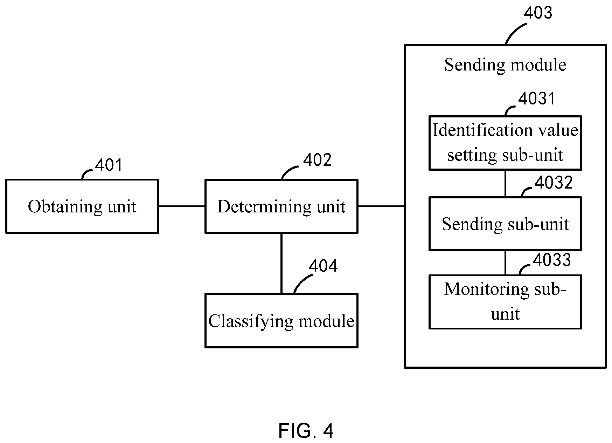

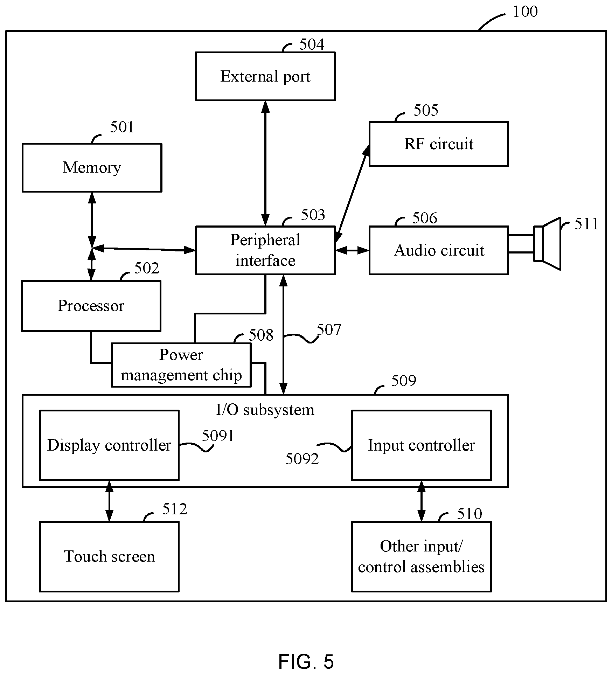

FIG. 1 is a flowchart of a method for processing ordered broadcast, provided by an embodiment of the disclosure. The embodiment may be applied to the situation of processing the ordered broadcast. The method may be executed by an ordered broadcast processing device 200 as illustrated in FIG. 4 of an electronic device 100 as illustrated in FIG. 5. The ordered broadcast processing device 200 of the electronic device 100 can be achieved by hardware structure and software structure. As illustrated in FIG.1, the method provided by the present disclosure includes operations of obtaining a broadcast message currently sent in a broadcast queue; determining a type of at least one broadcast receiver according to the broadcast message; and invoking at least one interface for sending the broadcast message and sending the broadcast message to the at least one broadcast receiver of a predefined type via the at least one interface, when the type of the at least one broadcast receiver is the predefined type. In detail, the method may include operations as follows.

At block 101, the method may include obtaining a broadcast message currently sent in a broadcast queue.

In a broadcast process, a service process of a broadcast sender sends the broadcast message to a management module (such as a ActivityManagerService) by invoking a broadcast sending function (such as a sendBroadcast function), the management module adds the broadcast message to the broadcast queue after receiving the broadcast message, and then sends the broadcast message of the broadcast queue to at least one broadcast receiver satisfying a receiving condition via a process communication mechanism (such as a Binder process communication mechanism).

In a broadcast mechanism, the broadcast message refers to a message sent by a system procedure or an application when the system procedure or the application is running and used to transmit information between the system procedures or between the applications. For example, the broadcast message may be a broadcast message started by the system procedure, a broadcast message of short message type, a broadcast message of phone type, a broadcast message of a third-party application, etc. The process that the broadcast sender sends the broadcast message and the process that the broadcast receiver receives the broadcast message are asynchronous operation processes, the broadcast sender and the broadcast receiver can realize a low-coupling matching through the management module, namely, the broadcast sender does not care which broadcast receiver receives the broadcast message after sending the broadcast message, and the broadcast receiver only receives an interested broadcast message and does not care which broadcast sender sends the broadcast message.

The broadcast sender refers to the system procedure or the application sending the broadcast message, and the broadcast receiver refers to the system procedure or the application receiving the broadcast message. The system procedure refers to the system procedure of an operating system of the electronic device 100, such as the system procedure of Android operating system, and the application described in the present disclosure may be the application installed in the electronic device 100 as the broadcast sender or the broadcast receiver, such as a short massage application, a phone application, etc. The management module and the broadcast sending function may be system procedure program module used to provide broadcast service, of the electronic device 100 as the broadcast sender. In some embodiments, the management module may be a hardware unit, such as a processor. The electronic device 100 of the present disclosure may be used to send the broadcast message and receive the broadcast message. When the system procedure or the application of the electronic device 100 is sending the broadcast message, the system procedure or the application of the electronic device 100 is functioned as the broadcast sender; otherwise when the system procedure or the application of the electronic device 100 is receiving the broadcast message, the system procedure or the application of the electronic device 100 is functioned as the broadcast receiver. In one embodiment, the broadcast sender and the broadcast receiver may be the system procedures or the applications in different electronic devices.

In some embodiments, obtaining the broadcast message currently sent in the broadcast queue of the block 101 may include: receiving by the management module the broadcast message sent by the broadcast sender, adding the broadcast message to the broadcast queue, and sending by the management module the broadcast message of the broadcast queue in sequence. The broadcast message may be distinguished as a normal broadcast message and an ordered broadcast message according to different broadcast sending modes. After the normal broadcast message is sent by the management module, the broadcast receiver receives the broadcast message disorderly. After the ordered broadcast message is sent by the management module, the broadcast receiver receives the broadcast message in sequence according to a certain order, namely, a second broadcast receiver begin to receive and process the broadcast message only after a first broadcast receiver has received and processed the broadcast message, and so on. The present disclosure may relate to control and process the ordered broadcast message. In general, when adopting the ordered broadcast as a sending mode, namely the broadcast message to be sent is the ordered broadcast message, the broadcast receivers need to receive the broadcast message in sequence, therefore some broadcast receivers who want to quickly receive and process the broadcast message have to wait for a previous broadcast receiver to finish processing the broadcast message. This results in that broadcast receivers who need to quickly respond to the broadcast message often cannot respond to the broadcast message immediately, thus reducing the efficiency of the broadcast processing.

In one embodiment, obtaining the broadcast message sent currently, of the broadcast queue at block 101, it can be seen from the above descriptions, may include the following. After an ordered broadcast is sent, all the corresponding broadcast receivers need to process the ordered broadcast message completely and feed back a result to the management module maintaining the broadcast queue, the management module judges whether the ordered broadcast message has been processed by all the broadcast receivers completely or not according to the fed result, and starts to send a next broadcast message of the broadcast queue only when the ordered broadcast message has been processed by all the broadcast receivers completely. In one embodiment, the broadcast message sent currently may be a broadcast message being sent currently, or may be a broadcast message ready for being sent when receiving the fed result of the previous broadcast message.

At block 102, the method may include determining a type of at least one broadcast receiver according to the broadcast message. The at least one broadcast receiver in block 102 may include all the broadcast receivers to receive the broadcast message.

In one embodiment, the process that the broadcast sender sends the broadcast message to the management module may be illustrated as follows (a counter application sends a broadcast message is taken as an example).

```
      //creating a broadcast message
      Intent intent = new Intent (BROADCAST_COUNTER_ACTION);
      //transferring a counter parameter and a counter value corresponding
 to the counter parameter
      intent.putExtra(COUNTER_VALUE, counter);
      //sending the broadcast message
      sendBroadcast(intent).
```

In some embodiments, that the at least one broadcast receiver receives the broadcast message may be achieved by a register process. When the at least one broadcast receiver receives the broadcast message, the management module may obtain a register instruction of registering a broadcast receiving function, the register instruction of registering the broadcast receiving function may be sent by each broadcast receiver. Usually, each broadcast receiver may register (subscribe) a broadcast message that it wants to receive from the management module via a process communication mechanism. In detail, a service process of the at least one broadcast receiver registers the broadcast receiving function in the management module via invoking a "registerReceiver" function, and defines the interested broadcast message. When the management module transmits the broadcast message of the broadcast queue, according to the registering information of the at least one broadcast receiver, the management module may transmit the broadcast message to a message circular queue corresponding to the at least one broadcast receiver registering the broadcast message, after the broadcast receiver receives the broadcast message, the broadcast receiver may callback a receiving method (such as "onReceive" method) of the broadcast receiving function which has been registered to execute corresponding functions to process the received broadcast message.

The register instruction may include a unique identifier indicating an identification of the broadcast receiver, and the broadcast receiving function may be a function that the broadcast receiver can receive the broadcast message from the management module. After receiving the register instruction, the management module adds the unique identifier of the broadcast receiver to a receiver list, so that the broadcast receiver can receive the broadcast message sent by the management module, so as to achieve registering/enabling the broadcast receiving function, of the broadcast receiver, in the management module.

In one embodiment, take the broadcast message is transmitted by the counter application as example, the register process that the broadcast receiver receives the broadcast message may be represented as follows.

```
      //Defining a interested broadcast message (subscribe the broadcast
 message)
    IntentFilter counterActionFilter =
    new IntentFilter (CounterService.BROADCAST_COUNTER_ACTION);
      //Registering the broadcast receiving function
      registerReceiver(counterActionReceiver, counterActionFilter) .
```

After the broadcast message (BROADCAST_COUNTER_ACTION) sent by the broadcast sender is transmitted by the management module, if one broadcast receiver has registered the broadcast receiving function, the broadcast message then can be received and processed by the corresponding broadcast receiver.

In some embodiments, a number of the at least one broadcast receiver may be more than one, and one broadcast message may correspond to multiple broadcast receivers, before determining the type of the at least one broadcast receiver according to the broadcast message, the method may further include: classifying types of all of the broadcast receivers to obtain a classification result of multiple broadcast receivers, and recording the classification result to a data base. All the broadcast receivers may be any receiver with the possibility of receiving the broadcast message. For example, all the broadcast receivers may be any system procedures or application with the possibility of receiving the broadcast message. The data base may be a storage space of a memory 501 as illustrated in FIG. 5.

In one embodiment, the types of all the broadcast receivers may include a system type, a third-party application platform type, and an unknown type. In one embodiment, the types of the broadcast receivers may be classified automatically according to the applications corresponding to the broadcast sender and the broadcast receiver after the applications are installed. In another embodiment, the types of the broadcast receivers may be classified according to a received classification instruction. In further another embodiment, the types of the broadcast receivers may be classified automatically according to all the applications which have been installed in the electronic device 100. The classification result is then stored into the data base as a judge basis for determining the type of the broadcast receiver in follow-up operations.

In one embodiment, classifying the types of all the broadcast receivers may further include: classifying the types of all the broadcast receivers according to frequencies of the broadcast message received by the broadcast receivers. For example, if the frequency of the broadcast message received by one broadcast receiver is greater than a first preset frequency (such as 100 times per day), then the type of the broadcast receiver may be determined as an important type; if the frequency of the broadcast message received by one broadcast receiver is greater than a second preset frequency (such as 50 times per day) and is less than the first preset frequency, then the type of the broadcast receiver may be determined as an medium important type; and if the frequency of the broadcast message received by one broadcast receiver is less than or equal to the second preset frequency, then the broadcast receiver may be determined as a normal type.

At block 103, the method may include invoking at least one interface for sending the broadcast message and sending the broadcast message to the at least one broadcast receiver of a predefined type via the at least one interface, when the type of the at least one broadcast receiver is the predefined type. A number of the at least one broadcast receiver of the predefined type is less than or equal to that of the at least one broadcast receiver whose type is determined in the block 102. The at least one interface is a communication interface function of the system procedure or the application, such as the sendBroadcast function described above, to achieve communication between the system procedures or between the applications.

In one embodiment, when the type of the broadcast receiver is classified to the system type, the third-party application platform type, and the unknown type, the predefined type may be the system type. In another embodiment, when the type of the broadcast receiver is classified to the important type, the medium important type, and the normal type, the predefined type may be the important type.

Therefore, when determining the type of the broadcast receiver is the predefined type, then the at least one interface for sending the broadcast message is invoked to send the broadcast message to the at least one broadcast receiver of the predefined type. In one embodiment, sending the broadcast message to the at least one broadcast receiver of the predefined type may include: sending the broadcast message to a work process of the broadcast receiver of the predefined type to cause the broadcast receiver to process the broadcast message.

According to the method provided in the present disclosure, through obtaining the broadcast message currently sent in the broadcast queue, determining the type of the corresponding broadcast receiver according to the broadcast message, and sending the broadcast message by invoking the interface for sending the broadcast message if the type of the broadcast receiver is the predefined type, the defect in the related ordered broadcast transmission process that the specific type of broadcast receiver can not timely process the broadcast message is solved , and the efficiency of the broadcast processing is improved. According to the present disclosure, the broadcast receiver of the predefined type can timely respond to the broadcast message.

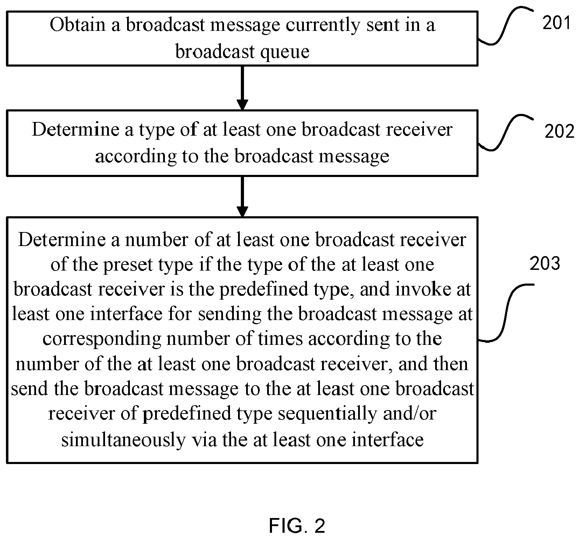

FIG. 2 is a flowchart of a method for processing ordered broadcast, provided by another embodiment of the disclosure. Based on the embodiment as illustrated in FIG. 1, in this embodiment, if the type of the broadcast receiver is the predefined type, invoking the at least one interface for sending the broadcast message and sending the broadcast message to the at least one broadcast receiver of the predefined type via the at least one interface may include: if the type of the broadcast receiver is the predefined type, then determining a number of the at least one broadcast receiver of the predefined type, and invoking the at least one interface for sending the broadcast message corresponding number of times according to the number of the at least one broadcast receiver, and then sending the broadcast message to the corresponding broadcast receiver simultaneously and/or in sequence via the invoked interface.

Based on the above optimization, as illustrated in FIG. 2, the method provided in this embodiment may include operations as follows.

At block 201, the method may include obtaining a broadcast message currently sent in a broadcast queue.

At block 202, the method may include determining a type of at least one broadcast receiver according to the broadcast message.

At block 203, the method may include determining the number of the at least one broadcast receiver of the predefined type if the type of the at least one broadcast receiver is the predefined type, and invoking at least one interface for sending the broadcast message corresponding number of times according to the number of the at least one broadcast receiver, and then sending the broadcast message to the at least one broadcast receiver of the predefined type sequentially and/or simultaneously via the at least one interface.

In one embodiment, when the number of the at least one interface is one, invoking the at least one interface for sending the broadcast message corresponding number of times according to the number of the at least one broadcast receiver, and then sending the broadcast message to the at least one broadcast receiver of the predefined type sequentially and/or simultaneously via the at least one interface may include: invoking one interface for corresponding number of times, and sending the broadcast message to the at least one broadcast receiver via the one interface in sequence. In another embodiment, when the number of the at least one interface is greater than one, namely the number of the at least one interface is multiple, invoking the at least one interface for sending the broadcast message corresponding number of times according to the number of the at least one broadcast receiver, and then sending the broadcast message to the at least one broadcast receiver of the predefined type sequentially and/or simultaneously via the at least one interface may include: invoking corresponding number of interfaces, and sending the broadcast message to the corresponding broadcast receivers simultaneously respectively via the number of interfaces.

In one embodiment, invoking the at least one interface for sending the broadcast message and sending the broadcast message to the at least one broadcast receiver of the predefined type via the at least one interface may include: generating a feedback parameter, invoking the at least one interface for sending the broadcast message according to the feedback parameter, and then sending the broadcast message to the at least one broadcast receiver of the predefined type via the at least one invoked interface. Because each broadcast receiver of an ordered broadcast queue needs to process the broadcast message in sequence, and a next broadcast receiver to process the broadcast message should wait for the previous broadcast receiver has processed the broadcast message and has fed back a process result, in one embodiment, through generating the feedback parameter (which can be understood as a fake parameter) to replace the original process result, thus the interface for sending the broadcast message can be invoked directly to send the broadcast message without waiting for the current broadcast receiver to feed back the process result and send the broadcast message according to the process result. Therefore, the broadcast receiver of the predefined type (such as a broadcast receiver of the system type or a broadcast receiver of the important type) can receive the broadcast message in the first time without waiting in line.

In one embodiment, through traversing the at least one broadcast receiver corresponding to the broadcast message, determining the number of the at least one broadcast receiver satisfying the predefined type while determining the type of each broadcast receiver, if the number of the at least one broadcast receiver is multiple, then invoke the at least one interface for sending the broadcast message corresponding number of times to send the broadcast message to the corresponding at least one broadcast receiver sequentially and/or synchronously. Thus the multiple broadcast receivers of the predefined type can receive and process the broadcast message in time or simultaneously, which greatly improves the processing efficiency of the broadcast message.

According to the method for processing the ordered broadcast provided in the embodiment of the present disclosure, the defects of the related broadcast mechanism are resolved. Therefore, the broadcast processing efficiency is improved, the system resource consumption is reduced, and the system stability is increased.

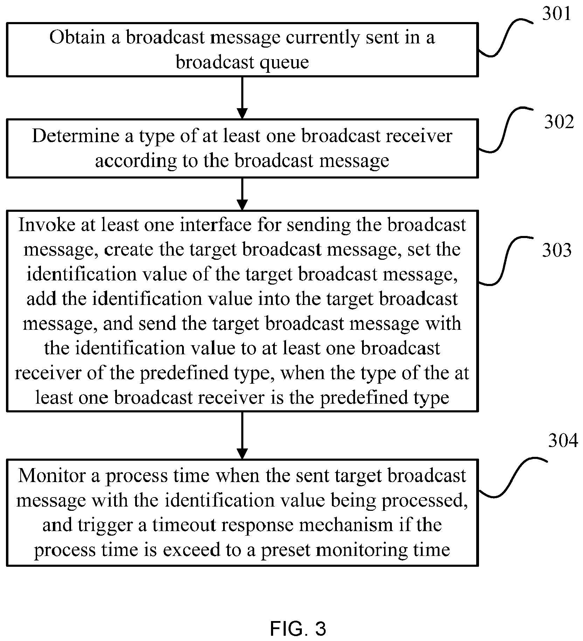

FIG. 3 is a flowchart of a method for processing ordered broadcast, provided by further another embodiment of the disclosure. Based on the above embodiments as illustrated in FIGs. 1 and 2, in this embodiment, sending the broadcast message to the at least one broadcast receiver of the predefined type may include: creating a target broadcast message, setting an identification value of the target broadcast message, adding the identification value into the target broadcast message, and sending the target broadcast message with the identification value to the at least one broadcast receiver of the predefined type; and monitoring a process time when the sent target broadcast message with the identification value is being processed, and triggering a timeout response mechanism if the process time exceeds a preset monitoring time.

Based on the above optimization, as illustrated in FIG. 3, the method provided in this embodiment may include operations as follows.

At block 301, the method may include obtaining a broadcast message currently sent in a broadcast queue.

At block 302, the method may include determining a type of at least one broadcast receiver according to the broadcast message.

At block 303, the method may include invoking at least one interface for sending the broadcast message, creating the target broadcast message, setting the identification value of the target broadcast message, adding the identification value into the target broadcast message, and sending the target broadcast message with the identification value to the at least one broadcast receiver of the predefined type, when the type of the at least one broadcast receiver is the predefined type.

In one embodiment, the identification value may be a hash value, each hash value corresponds to a unique broadcast message, therefore, the target broadcast message may be identified and determined uniquely by adding the identification value into the target broadcast message.

At block 304, the method may include: monitoring the process time when the sent target broadcast message with the identification value is being processed, and triggering the timeout response mechanism if the process time exceeds the preset monitoring time (such as 5 seconds).

In one embodiment, the method described above is executed by the management module. The management module sets the timeout response mechanism for the process of sending the broadcast message, namely if the broadcast message is sent slowly, thus trigger the timeout response mechanism to cause the application to exit. The preset monitoring time may be a default time or a time defined by a user of the electronic device 100. For example, the management module starts to time at the moment of sending the broadcast message with the identification value, and the timeout response mechanism would be triggered if the feedback result indicating that the broadcast message has been processed completely is not received within the preset monitoring time, thus avoiding system crash due to the broadcast inefficiency caused by excessively long process time of the broadcast message sent through the invoked interface.

In some embodiments, after monitoring the process time when the sent target broadcast message with the identification value is being processed, the method may further include: processing the feedback result of the broadcast message according to the broadcast receiver of the predefined type, and canceling to monitor the process time of the broadcast message, where the feedback result includes the identification value of the broadcast message. Therefore, when receiving the feedback result of the broadcast message, then determine the monitored broadcast message according to the identification value included in the feedback result, and cancel to monitor the process time of the broadcast message accordingly.

This embodiment provides the method for processing the ordered broadcast, which avoids system security risks caused by timeout of processing the broadcast message, further improves the foregoing solution, and improves system security

FIG. 4 is a block diagram of an ordered broadcast processing device 200 provided in one embodiment. The ordered broadcast processing device 200 is used to execute the methods for processing the ordered broadcast as described in above embodiments. The ordered broadcast processing device 200 equips corresponding function modules/units to execute the above methods and achieves the corresponding advantageous effects. The ordered broadcast processing device 200 can be a hardware or a software, and can be integrated in the electronic device 100 as illustrated in FIG. 5. As illustrated in FIG. 4, the ordered broadcast processing device 200 may include an obtaining unit 401, a determining unit 402, a sending module 403, and a classifying module 404.

The obtaining unit 401 is configured to obtain a broadcast message currently sent in a broadcast queue.

The determining unit 402 is configured to determine a type of at least one broadcast receiver according to the broadcast message.

The sending module 403 is configured to invoke at least one interface for sending the broadcast message and send the broadcast message to the at least one broadcast receiver of a predefined type via the at least one interface, when the type of the at least one broadcast receiver is the predefined type.

The solution provided in the present disclosure can resolve the defects of the related broadcast mechanism, thus can improve the broadcast processing efficiency, reduces the system resource consumption, and increases the stability of the system.

The classifying module 404 is used to classify types of all the broadcast receivers to obtain a classification result of all the broadcast receivers, and recording the classification result to a data base, before the determining unit 402 determines the type of the at least one broadcast receiver according to the broadcast message.

In at least one implementation, the sending module 403 is configured to: generate a feedback parameter, invoke the at least one interface for sending the broadcast message according to the feedback parameter, and then send the broadcast message to the corresponding broadcast receiver via the invoked interface.

In at least one implementation, the sending module 403 is configured to: determine a number of the at least one broadcast receiver of the predefined type if the at least one broadcast receiver is the predefined type, and invoke the at least one interface for sending the broadcast message corresponding number of times according to the number of the at least one broadcast receiver, and then send the broadcast message to the corresponding broadcast receiver sequentially and/or simultaneously via the at least one interface.

In at least one implementation, the sending module 403 may include an identification value setting sub-unit 4031, a sending sub-unit 4032, and a monitoring sub-unit 4033. The identification value setting sub-unit 4031 is used to create a target broadcast message, set an identification value of the target broadcast message, and add the identification value into the target broadcast message. The sending sub-unit 4032 is used to send the target broadcast message with the identification value to the at least one broadcast receiver of the predefined type. The monitoring sub-unit 4033 is used to monitor a process time when the sent target broadcast message with the identification value is being processed, and trigger a timeout response mechanism if the process time exceeds a preset monitoring time.

In at least one implementation, the monitoring sub-unit 4033 is further used to process the feedback result of the broadcast message according to the broadcast receiver of the predefined type, and cancel to monitor the process time of the broadcast message, after monitoring the process time when the sent target broadcast message with the identification value is being processed. The feedback result includes the identification value of the broadcast message.

Based on the above embodiments, the present disclosure further provides the electronic device 100, the electronic device 100 may include the ordered broadcast processing device 200 described above. FIG. 5 is a structure diagram of the electronic device 100, provided by one embodiment of the present disclosure. As illustrated in FIG. 5, in one embodiment, the electronic device 100 may include but not limited to: a memory 501, a processor 502, such as a central processing unit (CPU), a peripheral interface 503, a Radio Frequency (RF) circuit 505, an audio circuit 506, a loudspeaker 511, a power management chip 508, an input/output (I/O) subsystem 509, a touch screen 512, other input/control assemblies 510, an external port 504, and other components. These components communicate with each other via one or more communication bus or signal lines 507.

It should be understood that, the electronic device 100 as illustrated in FIG. 5 is only an example and the electronic device 100 can include more or less components than that illustrated in FIG. 5. Two or more components as illustrated in FIG. 5 also can be integrated to one component, the components as illustrated in FIG. 5 also can be substituted by other similar or different components. Each component as illustrated in FIG. 5 can be achieved as hardware, software, or a combination of hardware and software including one or more signal processing/specific integrated circuit.

The electronic device 100, provided in one embodiment, for processing ordered broadcast would be described in detail as follows. In one embodiment, the electronic device 100 is a mobile phone for example.

The memory 501 can be accessed by the processor 502, the peripheral interface 503 and other components. The memory 501 may include a high speed random access memory, and may further include a nonvolatile memory, such as one or more disk storage, flash memories, or solid-state storage.

The peripheral interface 503 may connect an input/output peripheral device to the processor 502 and the memory 501.

The I/O subsystem 509 may connect input/output peripheral components of the electronic device, such as the touch screen 512, and other input/control assemblies 510 to the peripheral interface 503. The I/O subsystem 509 may include a display controller 5091 and one or more input controllers 5092 for controlling the other input/control assemblies 510. The one or more input controller 5092 may receive electrical signals from the other input/control assemblies 510 or transmit the electrical signals to the other input/control assemblies 510. The other input/control assemblies 510 may include but not limited to: physical buttons (push buttons or rocker arm buttons), dial plates, slide switches, joysticks, and wheel buttons. It should be noted that, the input controller 5092 may connect to any one of a keyboard, an infrared port, a universal serial bus, and a pointing device such as a mouse.

The touch screen 512 is an input and output interface between the electronic device 100 and the user, and the touch screen 512 may display visual content to the user, with the visual content including pictures, texts, icons, videos, etc.

The display controller 5091 of the I/O subsystem 509 may receive electrical signals from the touch screen 512 or transmit the electrical signals to the touch screen 512. The touch screen 512 is used to detect touch operations on it, and the display controller 5091 is used to convert the detected touch operations to interactions with user interface objects displayed on the touch screen 512, namely achieving man-machine interactions. The user interface objects displayed on the touch screen 512 can be a game icon for running the game, a network icon for connecting to a corresponding network, etc. It should be noted that, the pointing device further can include an optical mouse, the optical mouse may be an extended portion of a touch-sensitive surface without displaying the visual content, or a touch-sensitive surface formed by the touch screen 512.

The RF circuit 505 is used to establish communication between the mobile phone and a wireless network (that is, in the network side), thus to achieve data transmission and receiving between the mobile phone and the wireless network, for example, sending or receiving message or e-mail. In detail, the RF circuit 505 is used to transmit or receive RF signals (also named as electromagnetic signals). The RF circuit 505 converts electrical signals to the electromagnetic signals or converts the electromagnetic signals to the electrical signals, and communicates with the wireless network or other devices via the electromagnetic signals. The RF circuit 505 may include a number of circuits for executing the function, where the number of circuits include but is not limited to: an antenna system, a RF transceiver, one or more amplifiers, a tuner, one or more oscillators, a digital signal processor, a coder and decoder (CODEC) chipset, a subscriber identity module (SIM) card, etc.

The audio circuit 506 is used to receive audio data from the peripheral interface 503, convert the audio data to electrical signals, and transmit the electrical signals to the loudspeaker 511.

The loudspeaker 511 is used to restore audio signals received from the wireless network via the RF circuit 505 to voice signals, and output the voice signals to the user.

The power management chip 508 is used to supply power to the processor 502, the I/O subsystem 509, and hardware connected by the peripheral interface 503.

In the embodiment, the processor 502 can execute the above methods described in FIGs. 1-3. Therefore, the electronic device 100 can processing the ordered broadcast effectively by using the processor 502 to execute:

Obtaining a broadcast message currently sent in a broadcast queue; determining a type of at least one broadcast receiver according to the broadcast message; invoking at least one interface for sending the broadcast message and sending the broadcast message to the at least one broadcast receiver of a predefined type via the at least one interface, when the type of the at least one broadcast receiver is the predefined type.

In one embodiment, before determining the type of the at least one broadcast receiver according to the broadcast message, the processor 502 further executes: classifying types of all the broadcast receivers to obtain a classification result of all the broadcast receivers, and recording the classification result to a data base.

In one embodiment, invoking the at least one interface for sending the broadcast message and sending the broadcast message to the at least one broadcast receiver of the predefined type via the at least one interface may include: generating a feedback parameter, invoking the at least one interface for sending the broadcast message according to the feedback parameter, and then sending the broadcast message to the corresponding broadcast receiver via the invoked interface.

In one embodiment, invoking the at least one interface for sending the broadcast message and sending the broadcast message to the at least one broadcast receiver of the predefined type via the at least one interface, when the type of the at least one broadcast receiver is the predefined type may include: determining a number of the at least one broadcast receiver of the predefined type, and invoking the at least one interface for sending the broadcast message corresponding number of times according to the number of the at least one broadcast receiver, and then sending the broadcast message to the corresponding broadcast receiver sequentially and/or simultaneously via the invoked interface.

In one embodiment, sending the broadcast message to the at least one broadcast receiver of the predefined type may include: creating a target broadcast message, setting an identification value of the target broadcast message, adding the identification value into the target broadcast message, and sending the target broadcast message with the identification value to the at least one broadcast receiver of the predefined type; and monitoring a process time when the sent target broadcast message with the identification value is being processed, and triggering a timeout response mechanism if the process time exceeds a preset monitoring time.

In one embodiment, after monitoring the process time when the sent target broadcast message with the identification value is being processed, the processor 502 may further execute an operation: processing the feedback result of the broadcast message according to the broadcast receiver of the predefined type, and canceling to monitor the process time of the broadcast message, where the feedback result includes the identification value of the broadcast message.

Embodiments within the scope of the present disclosure may also include tangible and/or non-transitory computer-readable storage media for carrying or having computer-executable instructions or data structures stored thereon. Such computer-readable storage media can be any available media that can be accessed by a general purpose or special purpose computer, including the functional design of any special purpose processor as discussed above. By way of example, and not limitation, such computer-readable media can include RAM, ROM, EEPROM, CD-ROM or other optical disk storage, magnetic disk storage or other magnetic storage devices, or any other medium which can be used to carry or store desired program code means in the form of computer-executable instructions, data structures, or processor chip design.

In one embodiment, the tangible and/or non-transitory computer-readable storage media can be the memory 501, and the computer-executable instructions or data structures stored in the tangible and/or non-transitory computer-readable storage media can be executed by the processor 502 to cause the processor 502 to execute the above method for processing the ordered broadcast as illustrated in FIGs. 1-3.

The electronic device 100 can be a desktop computer, a mobile phone, a tablet computer, a portable computer, etc.

The foregoing description merely depicts some exemplary embodiments of the disclosure and thus is not intended as limiting the scope of the disclosure. Any variations or substitutions that can be readily thought of by a person skilled in the art in light of the scope of the disclosure shall all be covered within the protection of the disclosure. Therefore, the scope of the disclosure is defined only by the appended claims.

## Claims

1. A method for processing ordered broadcast, comprising:
obtaining (101) a broadcast message currently sent in a broadcast queue;
determining (102) a type of at least one broadcast receiver according to the broadcast message; and
invoking (103) at least one interface for sending the broadcast message and sending (103) the broadcast message to the at least one broadcast receiver of a predefined type via the at least one interface, when the type of the at least one broadcast receiver is the predefined type.

2. The method according to claim 1, wherein, before determining (102) the type of the at least one broadcast receiver according to the broadcast message, the method further comprises:
classifying types of all the broadcast receivers to obtain a classification result, and recording the classification result to a data base.

3. The method according to claim 1 or 2, wherein the operation of invoking (103) the at least one interface for sending the broadcast message and sending (103) the broadcast message to the at least one broadcast receiver of the predefined type via the at least one interface comprises:
generating a feedback parameter;
invoking the at least one interface for sending the broadcast message according to the feedback parameter; and
sending the broadcast message to the at least one broadcast receiver of the predefined type via the at least one interface.

4. The method according to any one of claims 1-3, wherein the operation of invoking (103) the at least one interface for sending the broadcast message and sending (103) the broadcast message to the at least one broadcast receiver of the predefined type via the at least one interface, when the type of the at least one broadcast receiver is the predefined type comprises:
determining (203) a number of the at least one broadcast receiver of the predefined type; and
invoking (203) the at least one interface for sending the broadcast message corresponding number of times according to the number of the at least one broadcast receiver and sending the broadcast message to the at least one broadcast receiver of the predefined type sequentially and/or simultaneously via the invoked at least one interface.

5. The method according to any one of claims 1-4, wherein the operation of sending the broadcast message to the at least one broadcast receiver of the predefined type comprises:
creating (303) a target broadcast message,
setting (303) an identification value of the target broadcast message;
adding (303) the identification value into the target broadcast message; and
sending (303) the target broadcast message with the identification value to the at least one broadcast receiver of the predefined type.

6. The method according to any one of claims 1-5, wherein the operation of sending (103) the broadcast message to the at least one broadcast receiver of the predefined type further comprises:
monitoring (304) a process time when the sent target broadcast message with the identification value is being processed; and
triggering (304) a timeout response mechanism if the process time exceeds a preset monitoring time.

7. The method according to any one of claims 1-6, wherein, after monitoring (304) the process time when the sent target broadcast message with the identification value is being processed, the method further comprises:
disabling the monitoring of the process time of the broadcast message, according a feedback result generated by processing the broadcast message via the at least one broadcast receiver of the predefined type, wherein the feedback result comprises the identification value of the broadcast message.

8. An electronic device (100), comprising:
a processor (502); and
a memory (501) storing a plurality of instructions, the plurality of instructions being executed by the processor and causing the processor (502) to:
obtain a broadcast message currently sent in a broadcast queue;
determine a type of at least one broadcast receiver according to the broadcast message; and
invoke at least one interface for sending the broadcast message and send the broadcast message to the at least one broadcast receiver of a predefined type via the at least one interface, when the type of the at least one broadcast receiver is the predefined type.

9. The electronic device (100) according to claim 8, wherein the processor (502) is further configured to classify types of all the broadcast receivers to obtain a classification result, and record the classification result to a data base, before determining the type of the at least one broadcast receiver according to the broadcast message.

10. The electronic device (100) according to claim 8 or 9, wherein the processor (502) configured to invoke the at least one interface for sending the broadcast message and send the broadcast message to the at least one broadcast receiver of the predefined type via the at least one interface is further configured to:
generate a feedback parameter;
invoke the at least one interface for sending the broadcast message according to the feedback parameter; and
send the broadcast message to the at least one broadcast receiver of the predefined type via the at least one interface.

11. The electronic device (100) according to any one of claims 8-10, wherein the processor (502) configured to invoke the at least one interface for sending the broadcast message and send the broadcast message to the at least one broadcast receiver of the predefined type via the at least one interface, when the type of the at least one broadcast receiver is the predefined type is further configured to:
determine a number of the at least one broadcast receiver of the predefined type; and
invoke the at least one interface for sending the broadcast message corresponding number of times according to the number of the at least one broadcast receiver and send the broadcast message to the at least one broadcast receiver of the predefined type sequentially and/or simultaneously via the invoked at least one interface.

12. The electronic device (100) according to any one of claims 8-11, wherein the processor (502) configured to send the broadcast message to the at least one broadcast receiver of the predefined type is further configured to:
create a target broadcast message;
set an identification value of the target broadcast message;
add the identification value into the target broadcast message; and
send the target broadcast message with the identification value to the at least one broadcast receiver of the predefined type.

13. The electronic device (100) according to any one of claims 8-12, wherein the processor (502) configured to send the broadcast message to the at least one broadcast receiver of the predefined type is further configured to:
monitor a process time when the sent target broadcast message with the identification value is being processed by the at least one broadcast receiver of the predefined type; and
trigger a timeout response mechanism if the process time exceeds a preset monitoring time.

14. The electronic device (100) according to any one of claims 8-13, wherein, the processor (502) is further configured to:
disable the monitoring of the process time of the broadcast message according a feedback result generated by processing the broadcast message via the at least one broadcast receiver of the predefined type, after monitoring the process time when the sent target broadcast message with the identification value is being processed, wherein the feedback result comprises the identification value of the broadcast message.

15. A non-transitory computer-readable storage medium (501) for storing a plurality of instructions, wherein when executed by a processor (502), the plurality of instructions is configured to cause the processor (502) to execute a method for processing ordered broadcast, the method comprises:
obtaining a broadcast message currently sent in a broadcast queue;
determining a type of at least one broadcast receiver according to the broadcast message; and
invoking at least one interface for sending the broadcast message and sending the broadcast message to the at least one broadcast receiver of a predefined type via the at least one interface, when the type of the at least one broadcast receiver is the predefined type.
